# EUROPÄISCHE PATENTSCHRIFT

(11) **EP 2 424 796 B1**
(45) Veröffentlichungstag und Bekanntmachung des Hinweises auf die Patenterteilung: **22.10.2014**
(21) Anmeldenummer: 10715677.0
(22) Anmeldetag: 25.03.2010
(51) Int. Cl.: B65G 21/20, B65G 57/04, B65H 29/30

(54) **TRANSPORTVORRICHTUNG FÜR TAFELFÖRMIGE GÜTER SOWIE VERFAHREN ZUM TRANSPORTIEREN DER GÜTER**
TRANSPORT DEVICE FOR PANEL GOODS AND METHOD FOR TRANSPORTING THE GOODS
DISPOSITIF DE TRANSPORT POUR DES PRODUITS EN FORME DE PLAQUE ET PROCÉDÉ POUR LE TRANSPORT DES PRODUITS

(30) Priorität: 29.04.2009 DE 102009019307
(43) Veröffentlichungstag der Anmeldung: 07.03.2012
(73) Patentinhaber: KBA-MetalPrint GmbH, 70435 Stuttgart (DE)
(72) Erfinder: MICHEL, Björn, 70193 Stuttgart (DE); D'AMICO, Marcel, 71254 Ditzingen (DE)
(74) Vertreter: Stiel, Jürgen
(86) Internationale Anmeldenummer: PCT/EP2010/001855
(87) Internationale Veröffentlichungsnummer: WO 2010/124767

(56) Entgegenhaltungen:
- EP-A2- 0 426 259
- EP-A2- 0 827 920
- DE-B- 1 237 016
- DE-U1- 20 313 016

## Beschreibung

Die Erfindung betrifft eine Transportvorrichtung für tafelförmige Güter, insbesondere für ferromagnetische Tafeln, wie Stahlblechtafeln oder dergleichen, mit einer aktivierbaren und deaktivierbaren Halteeinrichtung zum Halten oder Freigeben der Güter, insbesondere in Überkopfposition, an/von einem Transportmittel, wobei die Halteeinrichtung eine Magnethalteeinrichtung aufweist.

Eine Transportvorrichtung der eingangs genannten Art ist bekannt. Sie dient dazu, tafelförmige Güter, insbesondere Stahlblechtafeln, zu transportieren und vorzugsweise an einem Stapelort zu stapeln. Zum Halten der Güter an einem Transportmittel der Transportvorrichtung ist eine Magnethalteeinrichtung vorgesehen. Sofern die Transportvorrichtung als Überkopf-Transporteinrichtung ausgebildet ist, werden die Güter von der Magnethalteeinrichtung in Überkopfposition gehalten, sodass sie bei aktivierter Halteeinrichtung fixiert und bei deaktivierter Halteeinrichtung freigegeben werden und sich daher vom Transportmittel lösen und beispielsweise an dem Stapelort gestapelt werden. Das Stapeln erfolgt vorzugsweise nach einem vorherigen Abbremsen des Transportmittels, also nur bei sehr niedriger Geschwindigkeit oder im Stillstand. Hierdurch werden reproduzierbare Verhältnisse für ein sauberes Abstapeln geschaffen. Hinsichtlich des nach dem magnetischen Prinzip erfolgenden Haltens der bekannten Transportvorrichtung der DE 101 57 098 ist ein Magnetsystem bekannt, das nach dem Flussverdrängungsprinzip arbeitet. Hierbei wird ein Elektromagnet aktiviert beziehungsweise deaktiviert, der bei seiner Aktivierung das Magnetfeld einer Permanentmagnetanordnung kompensiert, mit der Folge, dass das Magnetfeld der Permanentmagnetanordnung keine Haltekraft mehr auf das ferromagnetische Gut ausüben kann und das Gut daher freigegeben wird. Bei nicht aktiviertem Elektromagneten hält das Magnetfeld der Permanentmagnetanordnung das Gut am Transportmittel. Diese bekannte Einrichtung erfordert hohe Herstellkosten, die insbesondere durch das elektromagnetische Verdrängersystem anfallen.

Ferner ist es bekannt, nicht ferromagnetische Güter, beispielsweise Aluminiumtafeln, mittels Unterdruck an einem Transportmittel zu halten und durch Betätigung eines pneumatischen Ventils, mit dem der Unterdruck reduziert oder ausgeschaltet werden kann, freizugeben. Diese Art des Haltens hat einen hohen Energieverbrauch und ist ebenfalls mit hohen Herstellkosten verbunden.

Die DE 12 37 016 B offenbart eine Vorrichtung zum Stapeln und Entstapeln von Tafeln aus magnetisierbarem Werkstoff. Dabei sind als Hubelemente mit Magneten versehene Rollen an schwenkbaren Armen vorgesehen.

Die DE 203 13 016 U1 beschreibt eine Bandfördereinrichtung nach dem Oberbegriff des Anspruchs 1 für den hängenden Transport von Blechen. Hierbei ist ein Permanentmagnetfeld und ein schaltbarer Elektromagnet vorgesehen, womit ein Anker axial verschiebbar ist.

Der Erfindung liegt daher die Aufgabe zugrunde, eine Transportvorrichtung für tafelförmige Güter zu schaffen, die als Halteeinrichtung eine Magnethalteeinrichtung aufweist, niedrigere Herstellkosten hat und im Betrieb wirtschaftlich arbeitet.

Diese Aufgabe wird durch die Transportvorrichtung gemäß Anspruch 1 gelöst.

Sofern das insbesondere als ferromagnetische Tafel, insbesondere Stahlblechtafel, ausgebildete Gut in Überkopfposition am Transportmittel gehalten wird, kann es während des Transports, vorzugsweise nach vorherigem Reduzieren der Geschwindigkeit zur Weiterverarbeitung freigegeben und beispielsweise abgestapelt werden. Es kann auch ein Abbremsen bis zum Stillstand vorgesehen sein und erst dann eine Freigabe des Guts erfolgen. Mit den genannten Möglichkeiten lässt sich eine Vielzahl von tafelförmigen Gütern in aufeinanderfolgenden Schritten transportieren und beispielsweise stapeln. Für die Aktivierung beziehungsweise Deaktivierung der Halteeinrichtung ist eine konstruktiv einfache und in Betrieb energiesparende erfindungsgemäße Lösung geschaffen, da zum Verlagern der Feldlinien der permanentmagnetischen Pole lediglich ein ferromagnetischer Anker zwischen den beiden genannten Stellungen verlagert werden muss. Befindet sich der Anker in der ersten Stellung, so durchlaufen die Feldlinien das zu haltende Gut und halten es daher am Transportmittel. Wird der Anker in die zweite Stellung verlagert, so gelangt er in den Wirkungsbereich der Pole und veranlasst die Feldlinien zu einer Verlaufsänderung, vorzugsweise derart, dass sie nicht mehr das Gut erreichen, sondern auf kürzerem Wege, insbesondere nach dem Prinzip eines magnetischen Kurzschlusses, den Weg durch den ferromagnetischen Anker nehmen. Damit steht im Bereich des Transportmittels keine oder keine hinreichende magnetische Wirkung mehr zur Verfügung, sodass das Gut freigegeben wird und - bei einer Überkopfsituation - vom Transportmittel herabfällt.

Nach einer Weiterbildung der Erfindung ist vorgesehen, dass der Anker als Ankerplatte ausgebildet ist. Hierdurch lässt sich das Transportmittel sehr dicht im Bereich der permanent magnetisch erregten Pole anordnen, weil der Anker in Richtung der Dicke der Ankerplatte sehr schmal baut.

Nach einer Weiterbildung der Erfindung ist vorgesehen, dass der Anker zwischen den Polen und dem Transportmittel angeordnet ist. Er liegt daher mit einer seiner Seiten den Polen und mit einer dieser Seite gegenüberliegenden Seite dem Transportmittel zugewandt. Bei plattenförmiger Ausbildung des Ankers liegen somit die Pole relativ nahe beim Transportmittel.

Die Erfindung sieht vor, dass der Anker mindestens eine Öffnung aufweist und dass in der ersten Stellung des Ankers die Öffnung die Pole freigibt. In der ersten Stellung ist der Anker daher derart verlagert, dass die Pole im Bereich seiner Öffnung liegen, sodass die von dem einen Pol ausgehenden Feldlinien die Öffnung durchsetzen, zum Gut gelangen, das Gut durchsetzen - und es dadurch halten - und dann vom Gut wiederum die Öffnung durchsetzen und zum anderen Pol gelangen. Selbstverständlich ist es auch möglich, dass der Anker beispielsweise zwei Öffnungen aufweist, wobei die eine dem einen Pol und die andere dem anderen Pol zugeordnet ist.

Bei der Erfindung ist vorgesehen, dass die Öffnung des Ankers in dessen zweiter Stellung seitlich neben den Polen liegt, sodass der Anker die Pole abdeckt, mit der Folge, dass die von dem einen Pol ausgehenden Feldlinien in den Anker eintreten, also mangels vorhandener Öffnung nicht zum Gut gelangen können, dann den Anker durchsetzen, aus dem Anker wieder austreten und durch die Öffnung oder die genannte weitere Öffnung zum anderen Pol gelangen.

Es ist vorteilhaft, wenn die Pole von Permanentmagneten gebildet sind. Mithin liegen vorzugsweise zwei Permanentmagnete vor, deren Stirnseiten die Pole bilden. Alternativ kann selbstverständlich auch vorgesehen sein, dass die Pole an beispielsweise ferromagnetischen Körpern angeordnet sind, welche mit mindestens einem Permanentmagneten in magnetischer Verbindung, insbesondere in Berührungskontakt, stehen.

Eine bevorzugte Ausführungsform der Erfindung sieht vor, dass weitere, zu den Polen gegensätzliche Pole auf ihrer dem Transportmittel abgewandten Seite über ein magnetisches Rückschlusselement miteinander verbunden sind. Wenn die Pole beispielsweise an zwei beabstandet zueinander angeordneten Permanentmagneten ausgebildet sind, so weisen die Permanentmagnete die dem Gut zugewandten Pole und auch die dem Gut abgewandten, weiteren Pole auf. Diese abgewandten Pole, die also dem Transportgut abgewandt liegen, werden über das magnetische Rückschlusselement miteinander verbunden. Bei dem magnetischen Rückschlusselement handelt es sich beispielsweise um eine ferromagnetische Platte.

Um die Pole in gewünschter Position anordnen zu können, ist bevorzugt ein Halteelement vorgesehen, das die Feldlinien nicht beeinflussen soll und daher aus nichtmagnetischem Material besteht. Insbesondere sind die Pole beziehungsweise die Permanentmagnete in dem Halteelement angeordnet, beispielsweise sind sie in Bohrungen des Halteelements aufgenommen.

Um Reibungsverluste zu minimieren, liegt der Anker mindestens einem der Pole oder den Polen mit Abstand gegenüber, das heißt, beim Verlagern des Ankers berührt dieser die Pole nicht, schleift also nicht an ihnen, wodurch die aufzubringende Bewegungsenergie entsprechend klein bleibt.

Insbesondere weisen die Pole jeweils eine Polfläche auf, wobei die Polflächen im Wesentlichen parallel zur Fläche, insbesondere Ebene, des tafelförmigen Guts verlaufen. Die Polflächen liegen also parallel der Fläche des Guts mit geringem Abstand gegenüber.

Das Transportmittel ist insbesondere als mindestens ein Transportriemen ausgebildet. Vorzugsweise sind mindestens zwei parallel und mit Abstand zueinander verlaufende Transportriemen vorgesehen, an denen das jeweilige tafelförmige Gut, insbesondere die jeweilige Stahltafel, gehalten werden. Der mindestens eine, insbesondere die genannten beiden Transportriemen gehören einem Riementrum an, das heißt, der Transportriemen beziehungsweise die Transportriemen laufen endlos um. Demgegenüber ist die Halteeinrichtung ortsfest installiert. Die Magnethalteeinrichtung befindet sich auf einer Seite des Transportriemens/der Transportriemen und das zu haltende Gut befindet sich auf der anderen Seite des Transportriemens/der Transportriemen, wobei das Magnetfeld der Magnethalteeinrichtung durch den Transportriemen/die Transportriemen hindurchwirkt. Demzufolge besteht der Transportriemen/bestehen die Transportriemen aus einem nichtferromagnetischen Material.

Wie bereits erwähnt, kann die Transportvorrichtung vorzugsweise als Überkopf-Transportvorrichtung ausgebildet sein, die insbesondere einen Stapelbereich für von der deaktivierten Halteeinrichtung abgeworfene Güter aufweist.

Nach einer Weiterbildung der Erfindung ist vorgesehen, dass die Halteeinrichtung eine Unterdruckhalteeinrichtung, insbesondere für nichtferromagnetische Tafeln, aufweist. Neben der Magnethalteeinrichtung ist demzufolge eine weitere Maßnahme getroffen, die Güter am Transportmittel zu halten. Dies erfolgt durch Unterdruck, der von der Unterdruckhalteeinrichtung bei Aktivierung aufgebaut und bei Deaktivierung abgebaut wird, durch das Transportmittel, insbesondere den Transportriemen, hindurchwirkt und demzufolge das jeweilige Gut hält oder - beim Aktivieren der Magnethalteeinrichtung - mit hält.

Die Anordnung ist vorzugsweise derart getroffen, dass die Unterdruckhalteeinrichtung mindestens eine Unterdruckquelle aufweist, die an mindestens einen, bis zum vorzugsweise luftdurchlässigen Transportmittel führenden Unterdruckweg angeschlossen ist, wobei der Unterdruckweg durch Verlagern des Ankers verdeckt, beispielsweise verschlossen, beziehungsweise freigegeben wird. Mithin sorgt die Unterdruckquelle für einen permanenten Unterdruck, der jedoch im Bereich des Transportmittels "schaltbar" ist, indem die Verlagerung des Ankers, die zum Zwecke des Aktivierens beziehungsweise Deaktivierens der magnetischen Halteeinrichtung erfolgen kann, alternativ oder zusätzlich für das Trennen beziehungsweise Freigeben des Unterdruckwegs verwendet wird, wodurch am Transportmittel ein Unterdruck zum Halten des Guts aufgebaut oder abgebaut wird, sodass das Gut freigegeben wird. Das Verlagern des Ankers erfordert nur einen relativ geringen Energieeinsatz, sodass ein kostengünstiger Betrieb möglich ist.

Ferner ist es vorteilhaft, wenn das Transportmittel aus luftdurchlässigem Material besteht und/oder mit Unterdrucköffnungen versehen ist. Diese beiden Maßnahmen stellen jeweils sicher, dass der auf der einen Seite des Transportmittels anliegende Unterdruck sich auf der gegenüberliegenden, das Gut aufweisenden Seite des Transportmittels auswirkt, um auf das Gut wirken zu können.

Es ist vorteilhaft, wenn zwischen Transportmittel und Anker ein Verschleißschutz, insbesondere aus nichtmagnetisierbarem Material, insbesondere ein Verschleißblech, vorzugsweise ein Edelstahlblech, angeordnet ist. Dieser möglichst dünne Verschleißschutz sorgt dafür, dass der Riemen, sofern er keinen Abstand hält, sondern Bauteile berührt, nicht am Anker reibt, sondern am verschleißfesten Bauteil. Um den Unterdruck der Unterdruckhalteeinrichtung bis zum jeweiligen Gut vordringen zu lassen, weist der Verschleißschutz vorzugsweise mindestens eine im Unterdruckweg liegende Durchlassöffnung auf.

Das Verlagern des Ankers von der ersten Stellung in die zweite Stellung und umgekehrt erfolgt vorzugsweise mittels eines Aktuators, der insbesondere als Kolben-/Zylindereinheit ausgebildet sein kann.

Die Erfindung betrifft ferner ein Verfahren zum Transportieren von tafelförmigen Gütern, insbesondere ferromagnetischen Tafeln, wie Stahltafeln oder dergleichen, unter Verwendung einer Transportvorrichtung nach mindestens einer der vorstehenden Ausgestaltungen, wobei die transportierten Güter mittels der aktivierbaren Halteeinrichtung am Transportmittel gehalten und beim Deaktivieren der Halteeinrichtung freigegeben, insbesondere in einem Stapelbereich abgeworfen, werden, wobei das jeweilige Gut von Permanentmagnetfeld der Halteeinrichtung gehalten wird, indem zumindest ein Anteil der Feldlinien des Permanentmagnetfelds durch das Gut hindurchläuft, und zum Freigeben des Guts mindestens ein Anteil der Feldlinien durch Verlagern des Ankers derart umgelenkt wird, dass diese Feldlinien den Anker durchsetzen. Die umgelenkten Feldlinien stehen also nicht mehr für das Halten des Guts zur Verfügung, sodass dieses freigegeben wird.

Die Zeichnungen veranschaulichen die Erfindung anhand von Ausführungsbeispielen und zwar zeigt:
- Figur 1: eine schematische Ansicht einer Transportvorrichtung,
- Figuren 2 bis 7: Detailansichten der Transportvorrichtung in verschiedenen Betriebszuständen und
- Figur 8: eine Detailansicht eines weiteren Ausführungsbeispiels einer Transportvorrichtung.

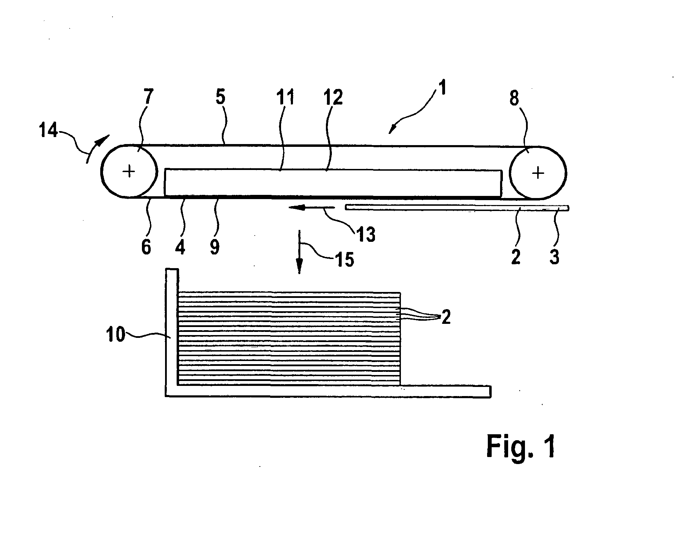

Die Figur 1 zeigt eine Transportvorrichtung 1, mit der tafelförmige Güter 2, insbesondere Stahlblechtafeln 3, transportiert und insbesondere als Stapel abgelegt werden können.

Die Transportvorrichtung 1 weist ein Transportmittel 4 in Form eines umlaufenden Trums 5 auf. Das Trum 5 weist mehrere, seitlich beabstandet zueinander angeordnete Transportriemen 6 auf, wobei nachstehend nur auf einen Transportriemen 6 eingegangen wird. Die übrigen Transportriemen 6 sind gleichartig ausgestaltet und wirken mit gleichartigen, nachstehend noch näher beschriebenen Baugruppen zusammen, sodass es ausreicht, nur einen Transportriemen 6 mit den zugehörigen Baugruppen zu beschreiben. Der Transportriemen 6 wird über zwei Umlenkräder 7 und 8 geführt, von denen mindestens eines mittels eines nicht dargestellten Antriebs antreibbar ist. Das Untertrum 9 des Trums 5 ist außenseitig einer Stapelablage 10 für die Güter 2 zugewandt. Der Innenseite des von einem Abschnitt des Transportriemens 6 gebildeten Untertrums 9 ist eine Halteeinrichtung 11 zugeordnet. Die Halteeinrichtung 11 ist als Magnethalteeinrichtung 12 ausgebildet und ortsfest angeordnet. Ist die Magnethalteeinrichtung 12 aktiviert, so wird ein dem Trum 5 zugeführtes ferrromagnetisches Gut 2 am Transportriemen 6, also am Untertrum 9 gehalten und entsprechend Pfeil 13 transportiert. Die Umlaufrichtung des Trums 5 ist mit einem Pfeil 14 verdeutlicht. Gelangt das Gut 2 in den Bereich der Stapelablage 10, so wird die Umlaufgeschwindigkeit des Trums 5 reduziert, vorzugsweise bis zum Stillstand, und anschließend die Magnethalteeinrichtung 12 deaktiviert, wodurch das Gut 2 freigegeben und gemäß Pfeil 15 auf der Stapelablage 10 durch Herabfallen abgelegt wird.

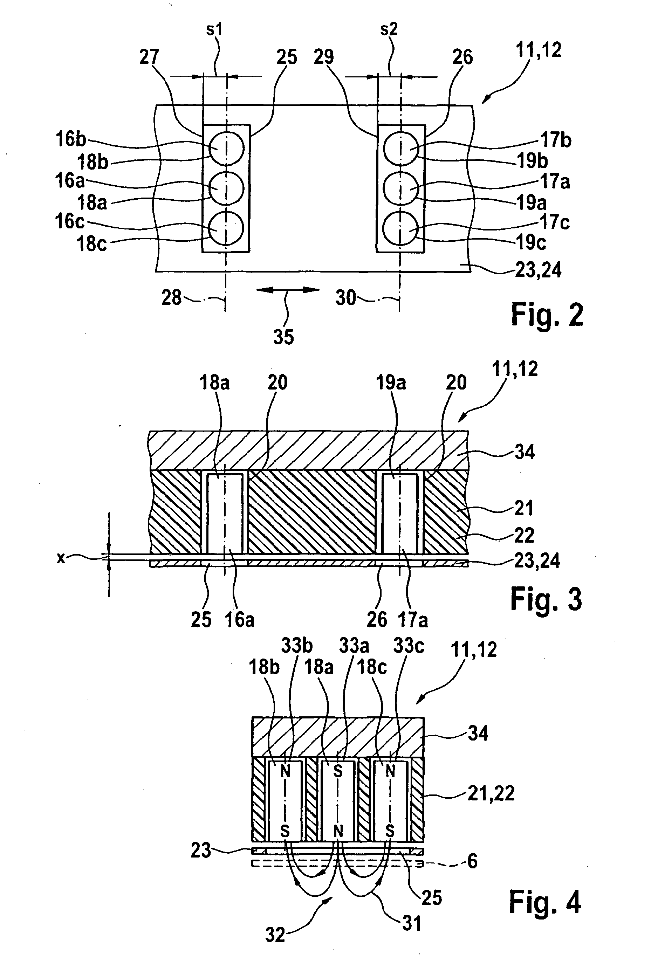

Die Figur 2 verdeutlicht eine Unteransicht auf einen Abschnitt der Halteeinrichtung 11. Die Figur 3 zeigt einen entsprechenden Längsschnitt und die Figur 4 einen Querschnitt. Die Halteeinrichtung 11 weist mindestens einen Pol 16a und einen Pol 16b auf, wobei bei dem in der Figur 2 dargestellten Ausführungsbeispiel beispielsweise drei quer zur Längserstreckung der Halteeinrichtung 12 liegende Pole 16a, 16b und 16c sowie - in Längsrichtung der Halteeinrichtung 11 versetzt dazu - drei entsprechend angeordnete Pole 17a, 17b und 17c aufweist. Die Pole 16a, 16b, 16c gehören zu Permanentmagneten 18a, 18b, 18c und die Pole 17a, 17b, 17c zu Permanentmagneten 19a, 19b, 19c, wobei die Permanentmagnete 18a, 18b, 18c, 19a, 19b und 19c in Bohrungen 20 eines Halteelements 21 aus nichtmagnetisierbarem Material angeordnet sind. Beim Halteelement 21 handelt es sich bevorzugt um eine Trägerleiste 22 aus Kunststoff oder Aluminium.

Gemäß Figur 3 ist unterhalb der Pole 16a bis 17c ein Anker 23 angeordnet, der als Ankerplatte 24 ausgebildet ist. Er besteht aus ferromagnetischem Material und weist - gemäß Figur 2 - im Bereich der Pole 16a, 16b, 16c eine Öffnung 25 und im Bereich der Pole 17a, 17b, 17c eine Öffnung 26 auf. Die Anordnung ist vorzugsweise derart getroffen, dass eine Öffnungskante 27 der Öffnung 25 zu einer Mittellinie 28 der Pole 16a, 16b, 16c einen Abstand s1 und eine Öffnungskante 29 der Öffnung 26 zu einer Mittellinie 30 der Pole 17a, 17b, 17c einen Abstand s2 aufweist, wobei s1 ungleich s2 ist.

Die Anordnung ist nun so getroffen, dass der Pol 16a gegenüber den Polen 16b und 16c eine gegensätzliche magnetische Polarität aufweist, beispielsweise stellt der Pol 16a einen Nordpol dar während die Pole 16b und 16c Südpole der Permanentmagneten 18b und 18c sind. Dies hat zur Folge, dass sich - gemäß Figur 4 - Feldlinien 31 eines Magnetfeldes 32 ausbilden, die vom Nordpol des Permanentmagneten 18a ausgehen, die Öffnung 25 des Ankers 23 durchsetzen und bogenförmig zu den Südpolen der Permanentmagnete 18b und 18c verlaufen, wobei sie wiederum die Öffnung 25 des Ankers 23 durchsetzen. Auf der dem Anker 23 abgewandten Seite liegen ebenfalls Pole 33a, 33b und 33c der Permanentmagnete 18a, 18b und 18c, wobei diese Pole 33a, 33b, 33c über ein magnetisches Rückschlusselement 34 aus ferromagnetischem Material miteinander verbunden sind, sodass der magnetische Fluss der Permanentmagnete 18a, 18b und 18c durch das Rückschlusselement 34 verläuft. Entsprechendes gilt für Permanentmagnete 19a, 19b,19c.

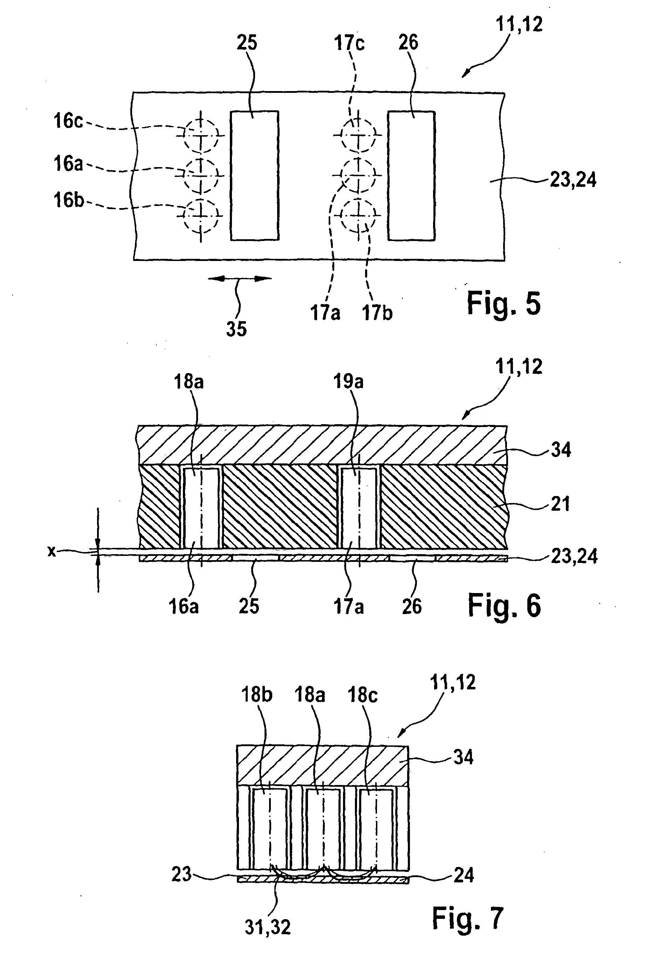

Gemäß Figur 3 ist erkennbar, dass der Anker 23 zu den Polen 16a, 16b, 16c sowie zu der Unterseite des Halteelements 21 einen Abstand x aufweist. Entsprechendes gilt gegenüber den Polen 19a, 19b, 19c, sodass bei einer Verlagerung des Ankers 23 gemäß Doppelpfeil 35 relativ zu den Permanentmagneten 18a, 18b, 18c, 19a, 19b, 19c keine Reibung zwischen den genannten Bauelementen auftritt. Die Anordnung ist derart getroffen, dass gemäß Vergleich der Figur 2 mit der Figur 5 bei einer Verlagerung des Ankers 23 die Öffnungen 25 und 26 nicht mehr mit den Polen 16a, 16b, 16c sowie 17a, 17b, 17c fluchten, sondern - gemäß Figur 5 - seitlich neben den Polen 16a, 16,b, 16c sowie 17a, 17b, 17c liegen. Während in der Figur 2 bis 4 eine erste Stellung des Ankers 23 gezeigt ist, zeigen die Figuren 5 bis 7 eine zweite, verlagerte Stellung des Ankers 23, die durch ein Nichtfluchten der Öffnungen 25 und 26 mit den vorstehend genannten Polen 16a, 16b, 16c und 17a, 17b, 17c gekennzeichnet ist.

Es ergibt sich folgende Funktion: Liegt - gemäß der Figuren 2 bis 4 - die erste Stellung des Ankers 23 vor, so verlaufen die Feldlinien 31 des Magnetfelds 32 durch die Öffnung 25, mit der Folge, dass der sich mit Bezug auf die Figuren 3 und 4 unterhalb des Ankers 23 befindende Transportriemen 6 (nur in Figur 4 gestrichelt eingezeichnet) von den Feldlinien 31 des Magnetfelds 32 durchsetzt wird, sodass für den Fall, dass sich dort das ferromagnetische Gut 2 befindet, die Feldlinien 31 innerhalb des Guts 2 verlaufen und dadurch das Gut 2 in Überkopfposition am Untertrum 9 der Transportvorrichtung 1 halten. Wird mittels einer geeigneten Einrichtung, beispielsweise einem als Kolben-/Zylindereinheit ausgebildeten Aktuator, der Anker 23 in die zweite Stellung gemäß der Figuren 5 bis 7 verlagert, so können die Feldlinien 31 nicht mehr aus der Öffnung 25 austreten, sondern verlaufen innerhalb des ferromagnetischen Materials des Ankers 23, so wie dies aus der Figur 7 hervorgeht. Demzufolge befindet sich kein Magnetfeld mehr im Bereich des Transportriemens 6, sodass ein dort gehaltenes, ferromagnetisches Gut 2 abfällt, beispielsweise - gemäß Figur 1 - auf der Stapelablage 10 abgelegt wird. Das vorstehend zu den Permanentmagneten 18a, 18b, 18c Gesagte gilt entsprechend für die Permanentmagnete 19a, 19b und 19c sowie weitere, nicht gezeigte Permanentmagnete und Öffnungen, die über die Längserstreckung der Halteeinrichtung 1 angeordnet sind. Da-wie aus der Figur 2 ersichtlich - die Abstände s1 und s2 ungleich groß sind, wird verhindert, dass beim Verlagern des Ankers 23 jeweils zum gleichen Zeitpunkt große magnetische Kräfte zu überwinden sind, wenn die Öffnungskanten 27, 29 über die Pole 16a, 16b, 16c, 17a, 17b, 17c verlagert werden, sondern die Kräfte treten während des Verlagerungsvorgangs zeitversetzt auf und sind daher in den einzelnen Zeitpunkten entsprechend kleiner. Damit wird die Verschiebekraft, die vom Aktuator aufzubringen ist, deutlich reduziert.

Um zu verhindern, dass bei dem sich bewegenden Transportriemen 6 am Anker 23 ein zu großer Verschleiß auftritt, wird der Transportriemen 6 vorzugsweise beabstandet zum Anker 23 geführt oder zumindest möglichst der Kontakt vermieden, wobei jedoch auch derart oder zusätzlich derart vorgegangen sein kann, dass sich zwischen dem Transportriemen 6 und dem Anker 23 ein Verschleißschutz (nicht dargestellt) befindet, beispielsweise ein sehr dünnes Edelstahlblech.

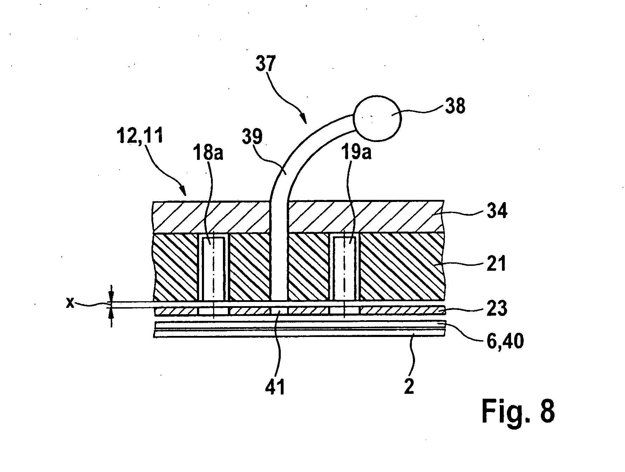

Die Figur 8 verdeutlicht ein weiteres Ausführungsbeispiel einer Transportvorrichtung 1, wobei lediglich ein der Figur 3 entsprechender Ausschnitt dargestellt ist. Bei diesem Ausführungsbeispiel ist neben der als Magnethalteeinrichtung 12 ausgebildeten Halteeinrichtung 11 ferner vorgesehen, dass die Halteeinrichtung 11 zusätzlich eine Unterdruckhalteeinrichtung 37 aufweist, die eine Unterdruckquelle 38 besitzt, die permanent Unterdruck erzeugt, der über einen Unterdruckweg 39 bis zum Transportmittel 4, das luftdurchlässig gestaltet ist, geführt wird. Das Transportmittel 40 kann wiederum als Transportriemen 6 ausgestaltet sein, wobei der Transportriemen 6 in der Figur 8 dargestellt ist und ebenfalls ein an ihm gehaltenes Gut 2. Der Anker 23 weist eine Unterdrucköffnung 41 auf, die in der dort dargestellten ersten Stellung des Ankers 23 mit dem Unterdruckweg 39 fluchtet. Demzufolge wird der Unterdruck der Unterdruckquelle 38 über den Unterdruckweg 39 und die Unterdrucköffnung 41 bis zum Transportmittel 40 geführt und wirkt sich auf dessen Unterseite durch Halten des Guts 2 aus, das demzufolge nicht aus ferromagnetischem Material bestehen muss, sondern beispielsweise ein Aluminiumblech ist. Wird der Anker 23 verlagert, nämlich in die zuvor erläuterte zweite Stellung, so fluchtet die Unterdrucköffnung 41 nicht mehr mit dem Unterdruckweg 39, sondern der Anker 23 schirmt den Unterdruckweg 39 gegenüber dem Transportriemen 6 ab, sodass auf das Gut 2 keine Ansaugkraft mehr ausgeübt wird und das Gut 2 nach unten herunterfällt. Selbstverständlich ist auch ein kombinierter Betrieb mit einem magnetischen Halten und einem Unterdruckhalten des Guts 2 möglich.

Der Abstand x (Figur 3 und 8) beträgt vorzugsweise 0,1 bis 0,2 mm und verhindert den direkten Kontakt zwischen dem Anker 23 und den Permanentmagneten 18a, 18b, 18c, 19a, 19b, 19c. Selbstverständlich ist es möglich, dass - über die Länge und/oder die Breite der Halteeinrichtung 21 verteilt, eine Vielzahl von Unterdruckwegen 39 mit entsprechenden Unterdrucköffnungen 41 vorgesehen sind, die mit einer oder mehreren Unterdruckquellen 38 zusammenwirken. Ist ein Verschleißschutz vorhanden, so muss dieser eine Öffnung für den Unterdruckweg 39 aufweisen.

Aufgrund der erfindungsgemäßen Ausgestaltung kann eine Halteeinrichtung 11 bei einer Transportvorrichtung 1 realisiert werden, die nur eine sehr geringe Bauhöhe aufweist. Bei der Unterdruckhaltevorrichtung 37 ist zu beachten, dass deren Haltekräfte für leichtere Güter als ferromagnetische Güter ausreichen, um - magnetfeldfrei - die Güter über Kopf zu halten. Dies liegt insbesondere daran, dass derartige Güter, beispielsweise Aluminiumtafeln, leichter sind als gleichgroße ferromagnetische Güter. Demzufolge sind als Unterdruckquelle, die insbesondere als Ventilator ausgebildet ist, kleine Dimensionierungen ausreichend. Dementsprechend tritt ein geringer Energieverbrauch auf und es entwickelt sich im Betrieb kein zu großes Betriebsgeräusch, also eine Lärmentwicklung ist nicht zu erwarten. Die Verschiebebewegung des Ankers 23 kann bei allen Ausführungsbeispielen vorzugsweise mittels eines Pneumatikzylinders erfolgen.

## Patentansprüche

1. Transportvorrichtung für tafelförmige Güter, insbesondere für ferromagnetische Tafeln, wie Stahlblechtafeln oder dergleichen, mit einer aktivierbaren und deaktivierbaren Halteeinrichtung zum Halten oder Freigeben der Güter, insbesondere in Überkopfposition, an/von einem Transportmittel, wobei die Halteeinrichtung eine Magnethalteeinrichtung aufweist, wobei die Magnethalteeinrichtung (12) mindestens zwei permanentmagnetisch erregte, ein Magnetfeld (32) ausbildende Pole (16a,16b,16c,17a,17b,17c) aufweist, wobei Feldlinien (31) des Magnetfelds (32) von Pol (16a,16b,16c,17a,17b,17c) zu Pol (16a,16b,16c,17a,17b,17c) verlaufen, und mit mindestens einem verlagerbar angeordneten ferromagnetischen Anker (23), **dadurch gekennzeichnet, dass** der Anker (23) derart verlagerbar angeordnet ist, dass in einer ersten Stellung - zum Aktivieren der Halteeinrichtung (11) - von ihm zumindest ein Anteil der Feldlinien (31) zum Durchlaufen durch das entsprechende Gut (2) freigegeben wird, und in einer zweiten Stellung - zum Deaktivieren der Halteeinrichtung (11) - durch ihn zumindest ein Anteil der Feldlinien (31) verläuft und nicht mehr das entsprechende Gut (2) erreicht, dass der Anker (23) mindestens eine Öffnung (25,26) aufweist und dass in der ersten Stellung des Ankers (23) die Öffnung (25,26) die Pole (16a,16b,16c,17a,17b,17c) freigibt und dass die Öffnung (25,26) des Ankers (23) in dessen zweiter Stellung seitlich neben den Polen (16a,16b,16c,17a,17b,17c) liegt, sodass der Anker (23) die Pole (16a,16b,16c,17a,17b,17c) abdeckt.

2. Transportvorrichtung nach Anspruch 1, **dadurch gekennzeichnet, dass** der Anker (23) zwischen den Polen (16a,16b,16c,17a,17b,17c) und dem Transportmittel (4) angeordnet ist.

3. Transportvorrichtung nach einem der vorhergehenden Ansprüche, **dadurch gekennzeichnet, dass** weitere, zu den Polen (16a,16b,16c,17a,17b,17c) gegensätzliche Pole (33a,33b,33c) auf ihrer dem Transportmittel (4) abgewandten Seite über ein magnetisches Rückschlusselement (34) miteinander verbunden sind.

4. Transportvorrichtung nach einem der vorhergehenden Ansprüche, **dadurch gekennzeichnet, dass** die Pole (16a,16b,16c,17a,17b,17c) in einem Halteelement (21) aus nichtmagnetisierbarem Material angeordnet sind.

5. Transportvorrichtung nach einem der vorhergehenden Ansprüche, **dadurch gekennzeichnet, dass** der Anker (23) zu mindestens einem der Pole (16a,16b,16c,17a,17b,17c) oder zu den Polen (16a,16b,16c,17a,17b,17c) mit Abstand gegenüberliegt.

6. Transportvorrichtung nach einem der vorhergehenden Ansprüche, **dadurch gekennzeichnet, dass** die Pole (16a,16b,16c,17a,17b,17c) jeweils eine Polfläche aufweisen, wobei die Polflächen im Wesentlichen parallel zur Fläche, insbesondere Ebene, des tafelförmigen Guts (2) verlaufen.

7. Transportvorrichtung nach einem der vorhergehenden Ansprüche, **dadurch gekennzeichnet, dass** das Transportmittel (4) mindestens einen Transportriemen (6) aufweist.

8. Transportvorrichtung nach einem der vorhergehenden Ansprüche, **gekennzeichnet durch** die Ausbildung als Überkopf-Transportvorrichtung, die insbesondere einen Stapelbereich für von der deaktivierten Halteeinrichtung (11) abgeworfene Güter (2) aufweist.

9. Transportvorrichtung nach einem der vorhergehenden Ansprüche, **dadurch gekennzeichnet, dass** die Halteeinrichtung (11) eine Unterdruckhalteeinrichtung (37), insbesondere für nichtferromagnetische Tafeln, aufweist.

10. Transportvorrichtung nach Anspruch 9, **dadurch gekennzeichnet, dass** die Unterdruckhalteeinrichtung (37) mindestens eine Unterdruckquelle (38) aufweist, die an mindestens einen bis zum vorzugsweise luftdurchlässigen Transportmittel (4) führenden Unterdruckweg (39) angeschlossen ist, wobei der Unterdruckweg (39) durch Verlagern des Ankers (23) abgedeckt, insbesondere verschlossen, beziehungsweise freigegeben wird.

11. Transportvorrichtung nach einem der vorhergehenden Ansprüche, **dadurch gekennzeichnet, dass** das Transportmittel (4) aus luftdurchlässigem Material besteht und/oder mit Unterdrucköffnungen (41) versehen ist.

12. Transportvorrichtung nach einem der vorhergehenden Ansprüche, **dadurch gekennzeichnet, dass** zwischen Transportmittel (4) und Anker (23) ein Verschleißschutz, insbesondere aus nichtmagnetisierbarem Material, insbesondere ein Verschleißblech, vorzugsweise Edelstahlblech, angeordnet ist.

13. Transportvorrichtung nach einem der vorhergehenden Ansprüche, **dadurch gekennzeichnet, dass** das Verlagern des Ankers (23) mittels eines Aktuators, insbesondere einer Kolben-/Zylindereinheit, erfolgt.

14. Verfahren zum Transportieren von tafelförmigen Gütern, insbesondere ferromagnetischen Tafeln, wie Stahlblechtafeln oder dergleichen, unter Verwendung einer Transportvorrichtung nach einem oder mehreren der Ansprüche 1 bis 13, wobei die transportierten Güter mittels der aktivierbaren Halteeinrichtung am Transportmittel gehalten und beim Deaktivieren der Halteeinrichtung freigegeben, insbesondere in einem Stapelbereich abgeworfen, werden, wobei das jeweilige Gut (2) von Permanentmagnetfeld (32) der Halteeinrichtung (11) gehalten wird, indem zumindest ein Anteil der Feldlinien (31) des Permanentmagnetfelds (32) durch das Gut (2) hindurchläuft, und wobei zum Freigeben des Guts (2) mindestens ein Anteil der Feldlinien (31) durch Verlagern des Ankers (23) derart umgelenkt wird, dass diese Feldlinien (31) den Anker (23) durchsetzen.

## Claims

1. Transport device for panel-shaped goods, in particular for ferromagnetic panels, such as sheet steel panels or the like, with an activatable and deactivatable holding device for holding or releasing the goods, in particular in the overhead position, by/from a transport means, the holding device comprising a magnetic holding device, the magnetic holding device (12) comprising at least two permanent magnet-energized poles (16a, 16b, 16c, 17a, 17b, 17c), forming a magnetic field (32), field lines (31) of the magnetic field (32) running from pole (16a, 16b, 16c, 17a, 17b, 17c) to pole (16a, 16b, 16c, 17a, 17b, 17c), and with at least one displaceably arranged ferromagnetic anchor (23), **characterized in that** the anchor (23) is arranged displaceably such that in a first position - for activating the holding device (11) - at least a part of the field lines (31) is set free by it for running through the corresponding goods (2), and in a second position - for deactivating the holding device (11) - at least a part of the field lines (31) runs through it and no longer reaches the corresponding goods (2), **in that** the anchor (23) has at least one opening (25, 26) and **in that** in the first position of the anchor (23) the opening (25, 26) releases the poles (16a, 16b, 16c, 17a, 17b, 17c) and **in that** the opening (25, 26) of the anchor (23) lies laterally next to the poles (16a, 16b, 16c, 17a, 17b, 17c) in its second position, such that the anchor (23) covers the poles (16a, 16b, 16c, 17a, 17b, 17c).

2. Transport device according to Claim 1, **characterized in that** the anchor (23) is arranged between the poles (16a, 16b, 16c, 17a, 17b, 17c) and the transport means (4).

3. Transport device according to one of the preceding claims, **characterized in that** further poles (33a, 33b, 33c) opposed to the poles (16a, 16b, 16c, 17a, 17b, 17c) are connected to one another by means of a magnetic yoke element (34) on the side thereof facing away from the transport means (4).

4. Transport device according to one of the preceding claims, **characterized in that** the poles (16a, 16b, 16c, 17a, 17b, 17c) are arranged in a holding element (21) of non-magnetisable material.

5. Transport device according to one of the preceding claims, **characterized in that** the anchor (23) lies opposite at a distance to at least one of the poles (16a, 16b, 16c, 17a, 17b, 17c) or to the poles (16a, 16b, 16c, 17a, 17b, 17c).

6. Transport device according to one of the preceding claims, **characterized in that** the poles (16a, 16b, 16c, 17a, 17b, 17c) in each case have a pole surface, the pole surfaces essentially running parallel to the surface, in particular plane, of the tabular goods (2).

7. Transport device according to one of the preceding claims, **characterized in that** the transport means (4) has at least one transport belt (6).

8. Transport device according to one of the preceding claims, **characterized by** the design as an overhead transport device, which in particular has a stacking area for goods (2) dropped by the deactivated holding device (11).

9. Transport device according to one of the preceding claims, **characterized in that** the holding device (11) has a vacuum holding device (37), in particular for non-ferromagnetic panels.

10. Transport device according to Claim 9, **characterized in that** the vacuum holding device (37) has at least one vacuum source (38), which is attached to at least one vacuum path (39) leading up to the preferable air-permeable transport means (4), the vacuum path (39) being covered, in particular closed, or opened, by displacement of the anchor (23).

11. Transport device according to one of the preceding claims, **characterized in that** the transport means (4) consists of air-permeable material and/or is provided with vacuum openings (41).

12. Transport device according to one of the preceding claims, **characterized in that** between transport means (4) and anchor (23) is arranged a wear protection, in particular of non-magnetisable material, in particular a wear sheet, preferably stainless steel sheet.

13. Transport device according to one of the preceding claims, **characterized in that** the displacement of the anchor (23) takes place by means of an actuator, in particular a piston/cylinder unit.

14. Method for transporting panel-shaped goods, in particular ferromagnetic panels, such as sheet steel panels or the like, using a transport device according to one or more of Claims 1 to 13, the transported goods being held on the transport means by means of the activatable holding device and being released on deactivating the holding device, in particular dropped in a stacking area, the respective goods (2) being held by the permanent magnetic field (32) of the holding device (11), by at least one portion of the field lines (31) of the permanent magnet (32) running through the goods (2), and for releasing the goods (2) at least one part of the field lines (31) being deflected by displacement of the anchor (23) such that these field lines (31) pass through the anchor (23).

## Revendications

1. Système de transport pour des produits en forme de plaques, en particulier pour des plaques ferromagnétiques telles que des plaques de tôle d'acier ou similaires, avec un dispositif de retenue activable et désactivable pour le maintien des produits contre un moyen de transport ou leur retrait de celui-ci, en particulier en position tête en bas, le dispositif de retenue comportant un dispositif de retenue à aimant, ledit dispositif de retenue à aimant (12) présentant au moins deux pôles (16a, 16b, 16c, 17a, 17b, 17c) excités par un aimant permanent et générant un champ magnétique (32), des lignes de champ (31) du champ magnétique (32) s'étendant de pôle (16a, 16b, 16c, 17a, 17b, 17c) à pôle (16a, 16b, 16c, 17a, 17b, 17c), et avec au moins un induit (23) ferromagnétique agencé de manière à être déplaçable, **caractérisé en ce que** l'induit (23) est agencé de manière à être déplaçable pour que, dans une première position - pour l'activation du dispositif de retenue (11) - au moins une partie des lignes de champ (31) soit libérée par lui pour traverser le produit (2) correspondant, et dans une deuxième position - pour la désactivation du dispositif de retenue (11) - il soit traversé par au moins une partie des lignes de champ (31) qui n'atteint plus le produit (2) correspondant, **en ce que** l'induit (23) présente au moins une ouverture (25, 26), **en ce que** dans la première position de l'induit (23), l'ouverture (25, 26) libère les pôles (16a, 16b, 16c, 17a, 17b, 17c), et **en ce que**, dans sa deuxième position, l'ouverture (25, 26) de l'induit (23) se trouve à côté des pôles (16a, 16b, 16c, 17a, 17b, 17c), de telle manière que l'induit (23) recouvre les pôles (16a, 16b, 16c, 17a, 17b, 17c).

2. Système de transport selon la revendication 1, **caractérisé en ce que** l'induit (23) est disposé entre les pôles (16a, 16b, 16c, 17a, 17b, 17c) et le moyen de transport (4).

3. Système de transport selon l'une des revendications précédentes, **caractérisé en ce que** d'autres pôles (33a, 33b, 33c) contraires aux pôles (16a, 16b, 16c, 17a, 17b, 17c) sont reliés entre eux par un élément magnétique de fermeture (34) sur leur côté distant du moyen de transport (4).

4. Système de transport selon l'une des revendications précédentes, **caractérisé en ce que** les pôles (16a, 16b, 16c, 17a, 17b, 17c) sont disposés dans un élément de maintien (21) en matériau non magnétisable.

5. Système de transport selon l'une des revendications précédentes, **caractérisé en ce que** l'induit (23) est opposé avec espacement à au moins un des pôles (16a, 16b, 16c, 17a, 17b, 17c) ou aux pôles (16a, 16b, 16c, 17a, 17b, 17c).

6. Système de transport selon l'une des revendications précédentes, **caractérisé en ce que** les pôles (16a, 16b, 16c, 17a, 17b, 17c) présentent chacun une surface de pôle, les surfaces de pôle s'étendant parallèlement à la surface, en particulier plane, du produit (2) en forme de plaque.

7. Système de transport selon l'une des revendications précédentes, **caractérisé en ce que** le moyen de transport (4) comporte au moins une courroie de transport (6).

8. Système de transport selon l'une des revendications précédentes, **caractérisé en ce qu'**il est réalisé comme système de transport tête en bas, présentant une zone d'empilement pour les produits (2) éjectés du dispositif de retenue (11) désactivé.

9. Système de transport selon l'une des revendications précédentes, **caractérisé en ce que** le dispositif de retenue (11) comporte un dispositif de retenue par aspiration (37), en particulier pour des plaques non ferromagnétiques.

10. Système de transport selon la revendication 9, **caractérisé en ce que** le dispositif de retenue par aspiration (37) comporte au moins une source d'aspiration (38), reliée à au moins un chemin d'aspiration (39) menant jusqu'au moyen de transport (4) préférentiellement perméable à l'air, ledit chemin d'aspiration (39) étant recouvert, en particulier fermé, ou libéré par déplacement de l'induit (23).

11. Système de transport selon l'une des revendications précédentes, **caractérisé en ce que** le moyen de transport (4) est en matériau perméable à l'air et/ou est pourvu d'ouvertures d'aspiration (41).

12. Système de transport selon l'une des revendications précédentes, **caractérisé en ce qu'**une protection contre l'usure, en particulier en matériau non magnétisable, en particulier une plaque d'usure, préférentiellement une plaque en acier inoxydable, est disposée entre le moyen de transport (4) et l'induit (23).

13. Système de transport selon l'une des revendications précédentes, **caractérisé en ce que** le déplacement de l'induit (23) est réalisé au moyen d'un actionneur, en particulier d'une unité piston/cylindre.

14. Procédé de transport de produits en forme de plaques, en particulier de plaques ferromagnétiques telles que des plaques de tôle d'acier ou similaires, recourant à un système de transport selon l'une ou plusieurs des revendications 1 à 13, où les produits transportés au moyen du dispositif de retenue activable sont maintenus contre le moyen de transport et libérés, en particulier éjectés dans une zone d'empilement, par désactivation du dispositif de retenue, où chaque produit (2) est maintenu par le champ d'aimant permanent (32) du dispositif de retenue (11), au moins une partie des lignes de champ (31) du champ d'aimant permanent (32) traversant le produit (2), et où, pour la libération du produit (2), au moins une partie des lignes de champ (31) est déviée par déplacement de l'induit (23), de telle manière que lesdites lignes de champ (31) traversent l'induit (23).
